# EUROPÄISCHE PATENTSCHRIFT

(11) **EP 1 978 617 B1**
(45) Veröffentlichungstag und Bekanntmachung des Hinweises auf die Patenterteilung: **26.10.2016**
(21) Anmeldenummer: 07006817.6
(22) Anmeldetag: 02.04.2007
(51) Int. Cl.: H02H 11/00

(54) **Schutzvorrichtung**
Protection device
Dispositif de protection

(43) Veröffentlichungstag der Anmeldung: 08.10.2008
(73) Patentinhaber: Delphi Technologies, Inc., Troy, MI 48007 (US)
(72) Erfinder: Noeth, Helmut, 90489 Nürnberg (DE)
(74) Vertreter: Delphi France SAS

(56) Entgegenhaltungen:
- EP-A2- 0 626 745
- DE-A1- 3 930 091
- DE-A1- 10 001 485
- US-A- 5 410 441

## Beschreibung

Die Erfindung betrifft eine Schutzvorrichtung für eine über eine Gleichspannungsquelle gespeiste Last, insbesondere für ein Fahrzeug-Infotainmentsystem, der im Oberbegriff des Anspruchs 1 angegebenen Art. Eine derartige Vorrichtung ist aus der EP-A2-0 626 745 bekannt.

Unter Infotainment versteht man die Verknüpfung zwischen dem Vermitteln von Information und Unterhaltung über ein so genanntes Multi-Media-Interface (auch Man-Machine-Interface), das abgekürzt als "MMI" bezeichnet wird. Derartige MMI-Systeme werden zunehmend auch in Kraftfahrzeugen eingesetzt. Zu den Funktionen eines solchen MMI-Systems zählen neben der Funktion eines Radios beispielsweise auch die Bereitstellung von Informationen über die jeweilige aktuelle Verkehrssituation und die Kartendarstellung im Zusammenhang mit einem Navigationssystem und/oder bestimmte Fahrzeug-Komfortfunktionen.

Für neuere Fahrzeug-Infotainmentsysteme wird gefordert, dass sie einer Spannung von -14 V an dem mit der betreffenden Gleichspannungsquelle gekoppelten Anschlüssen widersteht, ohne dass dabei die regelmäßig vorgesehene Sicherung durchbrennt. Demgegenüber war früher ein solches Durchbrennen der Sicherung bei einer falschen Polung der Batterie zugelassen. Dabei wurde eine für höhere Ströme ausgelegte Diode parallel zwischen die mit Masse bzw. dem positiven Pol der Batterie verbundenen Anschlüsse geschaltet.

Zudem wird neuerdings gefordert, dass die für die Energieversorgung vorgesehene Welligkeitsunterdrückung in einem Bereich von etwa 100 Hz (50 Hz) bis etwa 20 kHz zum Tragen kommt. Früher musste die Welligkeitsunterdrückung erst oberhalb etwa 1 kHz wirksam sein, und zwar bis etwa 15 kHz. Den jüngeren Anforderungen wird die bisher verwendete 100 µH-Spule nicht mehr gerecht, da diese zusammen mit dem der Last bzw. dem Infotainmentsystem zugeordneten Sperrkondensator von z.B. 2200 µF eine Resonanz bei einer Frequenz von etwa 300 Hz mit sich bringt.

Soll ein Infotainmentsystem insbesondere in ein Fahrzeug-Radio integriert werden, so muss es sämtliche für den Fahrzeugbereich geltenden Forderungen erfüllen. So wird in diesem Fall insbesondere auch gefordert, dass der Ruhestrom Iq kleiner als etwa 10 µA bleibt.

Bei der aus der EP-A-0 626 745 bekannten Schutzvorrichtung der eingangs genannten Art ist als Halbleiterschalter ein MOSFET vorgesehen, dessen Source-Anschluss mit der positiven Klemme der Gleichspannungsquelle und dessen Drain-Anschluss mit der Last verbunden ist.

Der Erfindung liegt die Aufgabe zugrunde, eine verbesserte Schutzvorrichtung der eingangs genannten Art zu schaffen, bei der insbesondere sichergestellt ist, dass sie bei einfachem und zuverlässigem Aufbau den zuvor erwähnten Forderungen gerecht wird.

Erfindungsgemäß wird diese Aufgabe dadurch gelöst, dass die parasitäre Diode des Halbleiterschalters Teil eines der Welligkeitsunterdrückung dienenden Spitzengleichrichters ist, der zudem einen der Last zugeordneten Kondensator, insbesondere Sperrkondensator, umfasst und bei falscher Polung gesperrt ist.

Erfindung wird somit eine parasitäre Diode eines Halbleiterschalters wie insbesondere eines Feldeffekttransistors dazu genutzt, die über die Gleichspannungsquelle gespeiste Last bzw. das Fahrzeug-Infotainmentsystem vor einer Verpolung bzw. falschen Polung der betreffenden Gleichspannungsquelle bzw. Batterie zu schützen, indem ein umgekehrter Stromfluss über die Klemmen der Gleichspannungsquelle verhindert wird. So kann mit einer solchen parasitären Diode eines Halbleiterschalters ein Stromfluss bis zu einer Umkehrspannung von etwa -30 V verhindert werden. Da die Halbleiterschaltung bei korrekter Polung durchgeschaltet ist und die parasitäre Diode demzufolge durch den Hauptpfad des Halbleiterschalters überbrückt ist, ist das Auftreten eines Spannungsabfalls an der in Durchlassrichtung geschalteten Diode ausgeschlossen, so dass die am Halbleiterschalter auftretenden Leistungsverluste auf ein Minimum reduziert sind. Entsprechend ist auch eine höhere Ausgangsleistung der in dem Infotainmentsystem vorgesehenen Leistungsverstärker sichergestellt. Aufgrund der Minimierung der Leistungsverluste im Bereich des Halbleiterschalters ist zudem auch gewährleistet, dass beispielsweise der Tuner eines Infotainmentsystems auch noch bei einer minimalen Spannung der Gleichspannungsquelle von beispielsweise etwa 9 V noch zuverlässig arbeitet. In Verbindung mit einem der Last bzw. Infotainmentsystem zugeordneten Kondensator, beispielsweise einem Kondensator von etwa 3300 µF, kommt der parasitären Diode des Halbleiterschalters zudem eine Glättungsfunktion zu, nachdem er zusammen mit dem Kondensator wie eine Art Spitzengleichrichter arbeitet.

Eine bevorzugte Ausführungsform der erfindungsgemäßen Schutzvorrichtung zeichnet sich dadurch aus, dass der Halbleiterschalter einen Feldeffekttransistor umfasst und die parasitäre Diode durch eine Substrat- oder Bulk-Diode des Feldeffekttransistors gebildet ist. Dabei können insbesondere Bulk und Source des Feldeffekttransistors miteinander verbunden und die parasitäre Diode durch die Substrat-Diode zwischen Bulk und Drain gebildet sein.

Der Feldeffekttransistor kann beispielsweise durch einen n-Kanal-FET und insbesondere durch einen n-Kanal-MOSFET gebildet sein.

Bevorzugt ist eine Sicherung mit dem Halbleiterschalter und der Last in Serie geschaltet. Aufgrund der Verwendung der parasitären Diode eines Halbleiterschalters als Schutz gegen eine Falschpolung ist insbesondere auch sichergestellt, dass die Sicherung auch bei einer Falschpolung normalerweise nicht durchbrennt.

Gemäß einer bevorzugten praktischen Ausführungsform der erfindungsgemäßen Schutzvorrichtung ist der insbesondere einen Feldeffekttransistor umfassende Halbleiterschalter über eine Ladungspumpe ansteuerbar.

Von Vorteil ist insbesondere auch, wenn Mittel zur Erfassung der Richtung des durch den Halbleiterschalter fließenden Stroms vorgesehen sind und der Halbleiterschalter in Abhängigkeit von der erfassten Stromrichtung ansteuerbar ist. Dabei erfolgt die Ansteuerung so, dass der Halbleiterschalter bei korrekter Stromrichtung durchgeschaltet und bei falscher Stromrichtung gesperrt ist.

Die Mittel zur Erfassung der Stromrichtung können zweckmäßigerweise einen Komparator umfassen, der die Source-Spannung und die Drain-Spannung des insbesondere einen Feldeffekttransistor umfassenden Halbleiterschalters miteinander vergleicht. Der Halbleiterschalter kann in diesem Fall in Abhängigkeit von dem vom Komparator gelieferten Vergleichsergebnis ansteuerbar sein. Dabei ist der insbesondere einen Feldeffekttransistor umfassende Halbleiterschalter bevorzugt über eine durch den Komparator beaufschlagte Ladungspumpe entsprechend ansteuerbar.

Gemäß einer zweckmäßigen praktischen Ausführungsform der erfindungsgemäßen Schutzvorrichtung ist der Halbleiterschalter zur Welligkeitsunterdrückung in Abhängigkeit von dem vom Komparator gelieferten Vergleichsergebnis so ansteuerbar, dass er in dem Fall, dass die Source-Spannung größer ist als die Drain-Spannung, durchgeschaltet bleibt und in dem Fall, dass die Source-Spannung kleiner ist als die Drain-Spannung, jeweils nur für eine vorgebbare Zeit gesperrt wird. Damit ist es möglich, über die vorgebbare Zeit die unterste Welligkeitsfrequenz zu bestimmen.

Die vorgebbare Zeit beträgt zweckmäßigerweise nur einige wenige 10 ms. Bevorzugt wird der Halbleiterschalter in dem Fall, dass die Source-Spannung kleiner ist als die Drain-Spannung, jeweils für maximal etwa 50 ms, insbesondere für maximal etwa 30 ms und vorzugsweise für maximal etwa 10 ms gesperrt.

Von Vorteil ist insbesondere auch, wenn der Komparator zur Welligkeitsunterdrückung so ausgelegt ist, dass der Halbleiterschalter in dem Bereich, in dem die Source-Spannung etwa gleich der Drain-Spannung ist, sanft bzw. kontinuierlich vom durchgeschalteten Zustand in den gesperrten Zustand und umgekehrt umgeschaltet wird, womit ein Schwingen des Systems vermieden wird.

Bevorzugt ist der Komparator durch einen Digital-Transistor über eine Spannungsversorgung aktivierbar, was unter anderem bezüglich einer Begrenzung des Ruhestroms von Vorteil ist. Dabei zeichnet sich eine bevorzugte praktische Ausführungsform dadurch aus, dass der Komparator eine Transistorschaltung umfasst und eine den Digital-Transistor und die Spannungsversorgung umfassende Konstantstromquelle vorgesehen ist, über die die Transistoren der Transistorschaltung vorgespannt werden.

Zwischen Source und Gate des insbesondere einen Feldeffekttransistor umfassenden Halbleiterschalters ist zweckmäßigerweise eine Zenerdiode geschaltet. Durch eine solche Zenerdiode ist der Halbleiterschalter gegen elektrostatische Entladungen geschützt. Zudem dient die Zenerdiode dazu, die Spannung zwischen Gate und Source so gering zu halten, dass gegebenenfalls die Amplitude des Ausgangssignals des Komparators groß genug ist, um den Halbleiterschalter über das Gate auch noch bei dem geringsten Amplitudenspitzenwert der Welligkeit am mit der Gleichspannungsquelle bzw. Batterie verbundenen Anschluss sperren zu können.

Eine weitere bevorzugte praktische Ausführungsform der erfindungsgemäßen Schutzschaltung zeichnet sich dadurch aus, dass Mittel vorgesehen sind, um bei einem Übergang der Source-Spannung des insbesondere einen Feldeffekttransistor umfassenden Halbleiterschalters von 0 V auf einen bei einer falschen Polung entsprechenden Spannungswert, z.B. auf -14V, die Differenzspannung zwischen Gate und Source auf einem Wert von etwa 0 V zu halten, und Mittel zur Unterdrückung eines Rückstroms vorgesehen sind.

Die erfindungsgemäße Schutzschaltung ist insbesondere für ein Fahrzeug-Infotainmentsystem geeignet. Dabei ist durch die Schutzschaltung beispielsweise sichergestellt, dass das System einer Spannung von insbesondere -14 V an einem mit der Gleichspannungsquelle verbindbarem Anschluss standhält, ohne dass dabei die Sicherung durchbrennt. Zudem kann durch Vorgabe einer jeweiligen entsprechenden Sperrzeit für den Halbleiterschalter sichergestellt werden, dass die für die Energieversorgung vorgesehene Welligkeitsunterdrückung bereits ab einem geringeren Frequenzwert wie beispielsweise 100 Hz oder 50 Hz wirksam wird, und zwar beispielsweise bis etwa 20 kHz. Schließlich kann durch die erfindungsgemäße Schutzvorrichtung der Ruhestrom auf ein Minimum reduziert und beispielsweise kleiner als etwa 10 µA gehalten werden.

Zur Glättung der Welligkeit kann durch die parasitäre Diode des insbesondere einen Feldeffekttransistor umfassenden Halbleiterschalters in Verbindung mit einem der Last bzw. Infotainmentsystem oder Radio zugeordneten Kondensator eine Art Spitzengleichrichter gebildet werden. Dabei ersetzt die parasitäre Diode die bisher vorgesehene Spule.

Ist im Fall einer falschen Polung der insbesondere durch einen Feldeffekttransistor gebildete Halbleiterschalter gesperrt, so sorgt die parasitäre Diode dafür, dass auch bis zu höheren negativen Spannungen, beispielsweise bis zu etwa -30 V, kein Rückstrom zum betreffenden mit der Gleichspannungsquelle bzw. Batterie verbindbaren Anschluss fließt. Zudem bringt die parasitäre Diode in Kombination mit einem darauf folgenden insbesondere der Last zugeordneten Kondensator eine Glättfunktion mit sich, indem die parasitäre Diode mit dem Kondensator eine Art Spitzengleichrichter bildet.

Indem der Halbleiterschalter bei korrekter Polung durchgeschaltet ist, wird die parasitäre Diode überbrückt, so dass bei korrekter Polung die am Halbleiterschalter auftretende Verlustleistung auf ein Minimum reduziert ist.

Ist die Versorgungsspannung nicht durch irgendeine Welligkeit überlagert, so bleibt der Halbleiterschalter durchgeschaltet, was beispielsweise dadurch erreicht wird, dass der betreffende Feldeffekttransistor bzw. dessen Gate nur durch die Ladungspumpe entsprechend beaufschlagt wird. Die Ladungspumpe kann beispielsweise durch eine Rechteckspannung eines Schaltreglers (SPS = Switched Power Supply) gespeist sein.

Zur Erfassung des durch den Halbleiterschalter fließenden Stromes kann ein die Ladungspumpe beeinflussender Komparator vorgesehen sein.

Ist die Spannungsversorgung von einer Welligkeit überlagert, so kann der Komparator die zwischen Source und Drain des Feldeffekttransistors auftretende Spannungsdifferenz erfassen. Ist bei in Vorwärtsrichtung fließendem Strom die Source-Spannung größer als die Drain-Spannung, so liefert der Komparator beispielsweise ein H-Signal. Der Feldeffekttransistor verbleibt in diesem Fall leitend. Ist dagegen im Fall eines Rückstroms die Source-Spannung kleiner als die Drain-Spannung, so liefert der Komparator beispielsweise ein L-Signal, woraufhin der Feldeffekttransistor gesperrt wird, allerdings nur für eine vorgebbare Zeit, beispielsweise maximal für einige 10 ms. Mit dieser Zeitgrenze wird die kleinste, vom Kunden geforderte Welligkeitsfrequenz definiert, die beispielsweise bei etwa 100 Hz oder 50 Hz liegen kann.

In dem Bereich, in dem die Source-Spannung etwa gleich der Drain-Spannung ist, kann durch eine entsprechende Auslegung des Komparators für einen sanften bzw. kontinuierlichen Übergang gesorgt werden, wodurch ein Schwingen des Systems verhindert wird.

Der Komparator kann durch einen Digital-Transistor über eine Spannungsversorgung deaktiviert werden, um den Ruhestrom zu minimieren. Dabei kann der Digital-Transistor in Kombination mit beispielsweise einem Widerstand eine Konstantstromquelle bilden, um die Transistoren des Komparators vorzuspannen.

Durch die Zenerdiode zwischen Gate und Source des Feldeffekttransistors wird der Feldeffekttransistor vor elektrostatischen Entladungen und Überspannungen geschützt. So darf die Gate-Source-Spannung bei dem Feldeffekttransistor nie größer als z. B. 20 V sein. Zudem wird durch diese Zenerdiode die Spannung so gering gehalten, dass die Amplitude des Ausgangssignals des Komparators groß genug ist, den Halbleiterschalter über dessen Gate auch noch bei der negativen Spitzenamplitude einer der Batterie-Gleichspannung überlagerten Sinuswelle, z. B. 4 Vpp, am betreffenden, mit der Batterie verbindbaren Anschluss gesperrt zu halten.

Bei einem Übergang an dem betreffenden mit der Batterie verbindbaren Anschluss von 0 V auf beispielsweise etwa -14 V wie im Fall einer falschen Polarität kann die Gatespannung des Feldeffekttransistors beispielsweise durch einen Kondensator bei 0 V gehalten werden, was einem Wert entspricht, der geringer ist als die Gate-Schwellenspannung gegenüber der Source-Spannung. In diesem Moment ist die Source-Spannung gleich der Klemmenspannung, also z. B. 14 V. Damit könnte ein Rückstrom fließen, bis das Gate entladen ist. Ein solcher Rückstrom kann nun beispielsweise durch einen Transistor vermieden werden, durch den das Gate am betreffenden, mit der Batterie verbindbaren Anschluss von 0 V bis -14 V entladen wird.

Zudem können auch einzelne Schaltungsteile der Schutzschaltung beispielsweise durch Dioden vor einer falschen Polung geschützt sein.

Zum Strommessen muss der Feldeffekttransistor einen minimalen Durchlasswiderstand besitzen, in diesem Fall z. B. 16 mOhm, so dass auch im durchgeschalteten Zustand ein Spannungsabfall entsteht. Andernfalls kann der Strom auch über einen zusätzlichen so genannten Shunt-Widerstand gemessen werden, der zum Feldeffekttransistor in Serie geschaltet ist.

Die Erfindung wird im Folgenden anhand eines Ausführungsbeispiels unter Bezugnahme auf die Zeichnung näher erläutert; in dieser zeigen:
- Fig. 1: ein Blockschaltbild einer beispielhaften Ausführungsform einer erfindungsgemäßen Schutzvorrichtung,
- Fig. 2: ein differenzierteres Schaltbild der Schutzvorrichtung gemäß Fig. 1,
- Fig. 3: ein Diagramm, in dem schematisch die Ausgangsspannung des in der Schutzvorrichtung enthaltenen Spitzengleichrichters über der Zeit dargestellt ist, und
- Fig. 4: ein Diagramm, in dem schematisch das Ergebnis einer FFT-Analyse des Eingangs- und des Ausgangssignals des Spitzengleichrichters dargestellt ist.

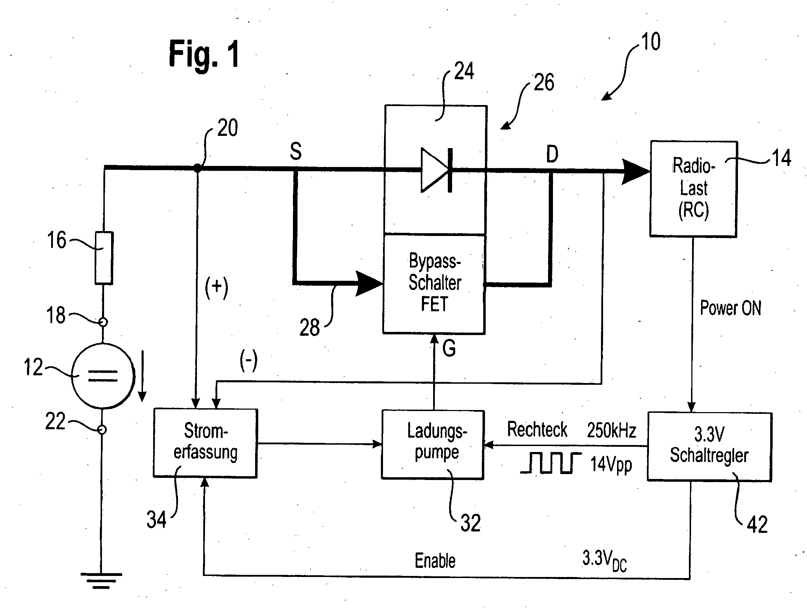

Fig. 1 zeigt ein Blockschaltbild einer beispielhaften Ausführungsform einer Schutzvorrichtung 10 für eine über eine Gleichspannungsquelle 12, beispielsweise Batterie, gespeiste Last 14, bei der es sich insbesondere um ein Autoradio handeln kann. Dabei kann diese Schutzvorrichtung 10 insbesondere für ein Fahrzeug-Infotainmentsystem vorgesehen sein, d.h. beispielsweise ein Autoradio mit entsprechend erweiterten Funktionen.

Die Schutzvorrichtung besitzt einen insbesondere über eine Sicherung 16 mit einer Klemme 18 der Gleichspannungsquelle 12 verbindbaren eingangsseitigen Anschluss 20. Die andere Klemme 22 der Gleichspannungsquelle 12 bzw. Batterie ist mit Masse verbindbar.

Die Schutzvorrichtung 10 umfasst eine mit der Last 14 in Serie geschaltete, zwischen dem eingangsseitigen Anschluss 20 und der Last 14 angeordnete Diode, die durch eine parasitäre Diode 24 eines Halbleiterschalters 26 gebildet ist, bei dem es sich bevorzugt um einen Feldeffekttransistor handelt.

Die parasitäre Diode 24 ist parallel zu einem Schaltpfad 28 des Halbleiterschalters 26 angeordnet, der bei durchgeschaltetem Halbleiterschalter 26 geschlossen und bei gesperrtem Halbleiterschalter geöffnet ist. Dabei ist die parasitäre Diode 24 des Halbleiterschalters 26 bei korrekter Polung der Gleichspannungsquelle 12 in Durchlassrichtung und bei falscher Polung in Sperrrichtung geschaltet.

Der Halbleiterschalter 26 ist in Abhängigkeit von der Polung der Gleichspannungsquelle 12 so ansteuerbar, dass er bei korrekter Polung zur Überbrückung der parasitären Diode 24 durch den Schaltpfad 28 durchgeschaltet und bei falscher Polung gesperrt ist.

Die parasitäre Diode 24 des im vorliegenden Fall einen Feldeffekttransistor umfassenden Halbleiterschalters 26 ist durch eine Substrat- oder Bulk-Diode des Feldeffekttransistors gebildet. Dabei können Bulk und Source S des Feldeffekttransistors miteinander verbunden sein, so dass die parasitäre Diode 24 durch die Substrat-Diode zwischen Bulk und Drain D gebildet ist.

Der Halbleiterschalter 26 kann beispielsweise durch einen n-Kanal-FET, insbesondere einen n-Kanal-MOSFET gebildet sein.

Wie anhand der Fig. 1 zu erkennen ist, ist die Sicherung 16 mit dem Halbleiterschalter 26 und der Last 14 in Serie geschaltet.

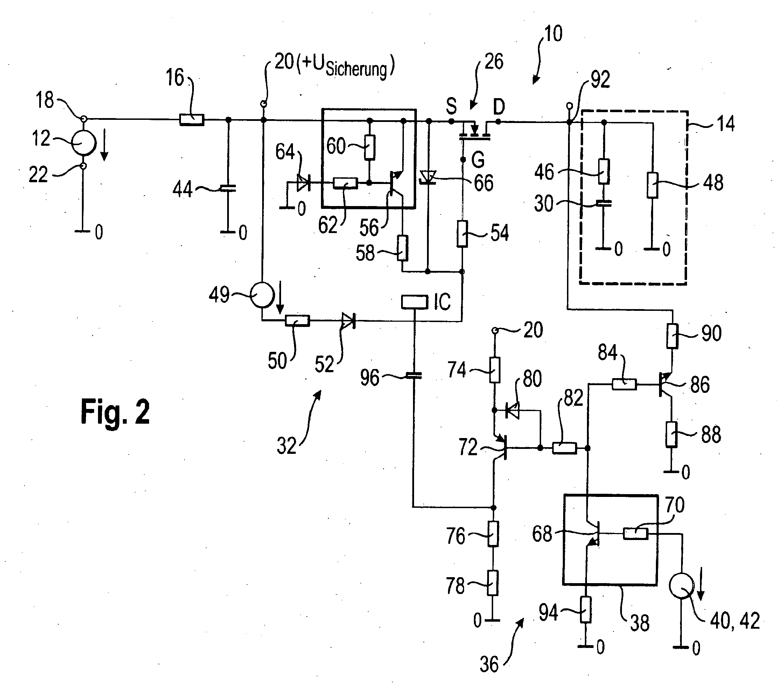

Die parasitäre Diode 24 des Halbleiterschalters 26 kann gleichzeitig Teil eines der Welligkeitsunterdrückung dienenden Spitzengleichrichters sein, der zudem einen der Last 14 zugeordneten Kondensator 30 (vgl. auch Fig. 2), insbesondere Sperrkondensator, umfasst.

Der durch einen Feldeffekttransistor gebildete Halbleiterschalter 26 ist über eine Ladungspumpe 32 ansteuerbar.

Es sind Stromerfassungsmittel wie insbesondere Mittel 34 zur Erfassung der Richtung des durch den Halbleiterschalter 26 fließenden Stromes vorgesehen, wobei der Halbleiterschalter 26 in Abhängigkeit von der erfassten Stromrichtung ansteuerbar ist. Dabei wird der Halbleiterschalter 26 bei korrekter Stromrichtung durchgeschaltet und bei falscher Stromrichtung gesperrt.

Die Stromerfassungsmittel 34 können insbesondere einen Komparator 36 (vgl. Fig. 2) umfassen, der die Source-Spannung und die Drain-Spannung des durch einen Feldeffekttransistor gebildeten Halbleiterschalters 26 miteinander vergleicht. Dabei ist der Halbleiterschalter 26 in Abhängigkeit von dem vom Komparator 36 gelieferten Vergleichsergebnis ansteuerbar. Im vorliegenden Fall ist der Halbleiterschalter 26 über die durch den Komparator 36 beaufschlagte Ladungspumpe 32 entsprechend ansteuerbar. Zum Strommessen muss der Feldeffekttransistor einen minimalen Durchlasswiderstand besitzen, in diesem Fall z. B. 16 mOhm, so dass auch im durchgeschalteten Zustand ein Spannungsabfall entsteht. Andernfalls kann der Strom auch über einen zusätzlichen so genannten Shunt-Widerstand gemessen werden, der zum Feldeffekttransistor in Serie geschaltet ist.

Dabei ist der Halbleiterschalter 26 zur Welligkeitsunterdrückung in Abhängigkeit von dem vom Komparator 36 gelieferten Vergleichsergebnis so ansteuerbar, dass er in dem Fall, dass die Source-Spannung größer ist als die Drain-Spannung, durchgeschaltet bleibt und in dem Fall, dass die Source-Spannung kleiner ist als die Drain-Spannung, jeweils für eine vorgebbare Zeit gesperrt wird. Hierbei wird der Halbleiterschalter 26 in dem Fall, dass die Source-Spannung kleiner ist als die Drain-Spannung, jeweils nur für maximal einige 10 ms gesperrt.

Der Komparator 36 kann zur Welligkeitsunterdrückung so ausgelegt sein, dass der Halbleiterschalter 26 in dem Bereich, in dem die Source-Spannung etwa gleich der Drain-Spannung ist, sanft bzw. kontinuierlich vom durchgeschalteten Zustand in den gesperrten Zustand und umgekehrt umgeschaltet wird.

Der Komparator 36 kann durch einen Digital-Transistor 38 über eine Spannungsversorgung 40 (vgl. Fig. 2) aktivierbar sein. Dabei kann der Komparator 36 eine Transistorschaltung umfassen und eine den Digital-Transistor 38 und die Spannungsversorgung 40 umfassende Konstantstromquelle vorgesehen sein, über die die Transistoren der Transistorschaltung vorgespannt werden.

Wie anhand der Fig. 1 zu erkennen ist, kann die Ladungspumpe 32 insbesondere über einen Schaltregler 42 beispielsweise mit einer Rechteckspannung (z.B. 250 kHz) beaufschlagt werden.

Fig. 2 zeigt ein differenzierteres Schaltbild der Schutzvorrichtung 10 gemäß Fig. 1.

Danach ist die eine Klemme 18 der insbesondere durch eine Batterie gebildeten Gleichspannungsquelle 12 mit der Sicherung 16 und die andere Klemme mit Masse verbunden. Die Klemme 18 der Gleichspannungsquelle 12 steht über die Sicherung 16 mit dem eingangsseitigen Anschluss 20 der Schutzvorrichtung 10 in Verbindung. Zwischen dem eingangsseitigen Anschluss 20 und Masse ist ein Kondensator 44 geschaltet.

Der eingangsseitige Anschluss 20 ist mit der Source S des im vorliegenden Fall beispielsweise durch einen n-Kanal-MOSFET gebildeten Halbleiterschalters verbunden, an dessen Drain D die Last 14 angeschlossen ist. Wie bereits erwähnt, kann die Last 14 im vorliegenden Fall durch ein Fahrzeug-Infotainmentsystem vorgegeben sein. Das dargestellte Ersatzschaltbild für diese Last 14 umfasst beispielsweise einen einerseits mit dem Drain-Anschluss D des Halbleiterschalters 26 und andererseits über den Kondensator 30 mit Masse verbundenen Widerstand 46 sowie einen zu der den Kondensator 30 und den Widerstand 46 umfassenden Serienschaltung parallel geschalteten Widerstand 48.

Der eingangsseitige Anschluss 20 ist über eine Spannungsversorgung 49, einen Widerstand 50, eine in Durchlassrichtung geschaltete Diode 52 und einen Widerstand 54 mit dem Gate-Anschluss des Halbleiterschalters 26 verbunden. Die Spannungsversorgung 48 bildet hier zusammen mit der Diode 52 und dem Widerstand 50 die Ladungspumpe 32.

Ein bipolarer npn-Transistor 56 ist mit seinem Emitter mit dem Source-Anschluss des Halbleiterschalters 26 und mit dem Kollektor-Anschluss über einen Widerstand 58 mit dem Knotenpunkt zwischen der Diode 52 und dem Widerstand 54 verbunden. Die Basis dieses Transistors 56 ist einerseits über einen Widerstand 60 mit dem Source-Anschluss des Halbleiterschalters 26 und andererseits über einen Widerstand 62 und eine Diode 64 mit Masse verbunden, wobei die Anode der Diode 64 an Masse angeschlossen ist. Zwischen dem Source-Anschluss des Halbleiterschalters 26 und dem Knotenpunkt zwischen den beiden Widerständen 54 und 58 ist eine Zenerdiode 66 vorgesehen. Dabei ist die Anode dieser Zenerdiode 66 mit dem Source-Anschluss des Halbleiterschalters 26 verbunden.

Die Stromerfassungsschaltung 36 umfasst den hier beispielsweise durch einen bipolaren npn-Transistor 68 und einen mit dessen Basis verbundenen Widerstand 70 gebildeten Digital-Transistor 36 und einen bipolaren pnp-Transistor 72, dessen Emitter über einen Widerstand 74 mit dem eingangsseitigen Anschluss 20 und dessen Kollektor über einen Widerstand 76 mit Masse verbunden ist. Der weitere Widerstand 78 ist für die Funktion nicht erforderlich.

Zwischen Emitter und Basis des Transistors 72 ist eine Diode 80 geschaltet, wobei deren Anode mit der Basis verbunden ist.

Die Basis des Transistors 72 wird über einen mit dem Kollektor des Transistors 68 verbundenen Widerstand 82 angesteuert, der andererseits über einen Widerstand 84 mit der Basis eines bipolaren pnp-Transistors 86 verbunden ist, dessen Kollektor über einen Widerstand 88 an Masse liegt und dessen Emitter über einen Widerstand 90 mit dem Eingang 92 der Last 14 und entsprechend mit dem Drain-Anschluss des Halbleiterschalters 26 verbunden ist.

Der Emitter des Transistors 68 liegt über einem Widerstand 94 an Masse. Die Basis des Transistors 68 ist über den Widerstand 70 mit der Spannungsversorgung 40 verbunden, die andererseits an Masse angeschlossen ist.

Der Kollektor des Transistors 72 ist über einen Kondensator 96 mit dem Knotenpunkt zwischen der Diode 52 und dem Widerstand 54 verbunden.

Die in den Fig. 1 und 2 gezeigte Schutzvorrichtung ist insbesondere für ein Fahrzeug-Infotainmentsystem geeignet, bei dem gefordert wird, dass es im Fall einer falschen Polung einer Spannung von insbesondere -14 V am eingangsseitigen Anschluss 20 standhält, ohne dass die Sicherung 12 durchbrennt.

Zudem kann mit dieser Schutzschaltung 10 beispielsweise auch sichergestellt werden, dass die Welligkeitsunterdrückung der Energieversorgung bereits ab beispielsweise etwa 100 Hz oder 50 Hz und bis etwa 20 kHz arbeitet.

Schließlich wird durch diese Schaltungsvorrichtung 10 auch der Ruhestrom Ig reduziert. So kann durch diese Schaltung beispielsweise sichergestellt werden, dass der Ruhestrom Iq kleiner etwa 10 µA gehalten wird.

Die Welligkeit wird durch einen Spitzengleichrichter geglättet, der durch die parasitäre Diode 24 (vgl. Fig. 1) des hier durch einen Feldeffekttransistor gebildeten Halbleiterschalters 26 und den Kondensator 30, insbesondere Sperrkondensator, der Last 14 bzw. des Autoradios oder Infotainmentsystems gebildet wird. Ein solcher Sperrkondensator kann beispielsweise einen Wert von etwa 2200 µF besitzen. Die parasitäre Diode 24 des Halbleiterschalters 26 ersetzt die bisher vorgesehene Spule.

Ist der hier durch einen Feldeffekttransistor gebildete Halbleiterschalter 26 gesperrt, so schützt die parasitäre Diode 24 die Last 14 vor einer falschen Polung der Gleichspannungsquelle 12, indem sie verhindert, dass ein rückwärtiger Strom zum eingangsseitigen Anschluss 20 fließt. Dabei kann ein solcher Rückstrom beispielsweise bis zu einer Spannung von etwa am eingangsseitigen Anschluss 20 verhindert werden. Ein weiterer Vorteil dieser parasitären Diode 24 besteht darin, dass sie in Kombination mit dem darauf folgenden Kondensator 30 der Last 14 bzw. des Autoradios oder Infotainmentsystems eine Glättung der Welligkeit bewirkt. Sie bildet also zusammen mit dem Kondensator 30, der beispielsweise einen Wert von etwa 3300 µF oder 2200 µF besitzen kann, eine Art Spitzengleichrichter.

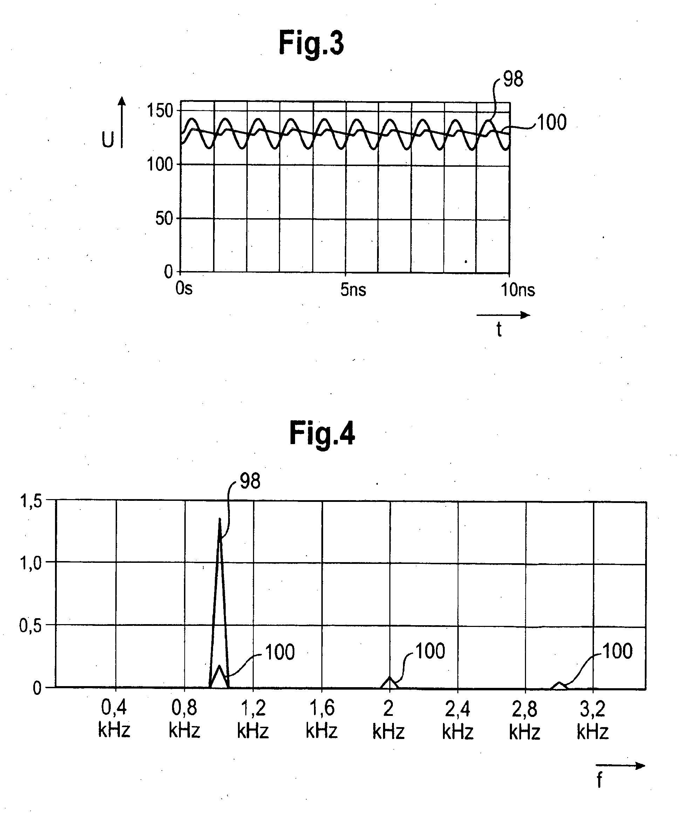

Fig. 3 zeigt ein Diagramm, in dem schematisch die Ausgangsspannung 98 dieses Spitzengleichrichters über der Zeit t dargestellt ist. Dabei ist diese geglättete Ausgangsspannung der nicht geglätteten Eingangsspannung 100 gegenübergestellt.

In dem Diagramm gemäß Fig. 4 ist schematisch das Ergebnis einer FFT-(Fast Fourier Transform)-Analyse des Eingangssignals 100 und des Ausgangssignals 98 des Spitzengleichrichters mit den Harmonischen dargestellt. Dabei wird beispielsweise eine Dämpfung von etwa 16 dB bei 1 kHz, in Abhängigkeit von dem Kondensator 30, erreicht.

Da der durch einen Feldeffekttransistor gebildete Halbleiterschalter 26 bei korrekter Polung der Gleichspannungsquelle 12 über die Ladungspumpe 32 durchgeschaltet und entsprechend durch den Schaltpfad 28 die parasitäre Diode 24 überbrückt wird, kommt der Vorwärtsspannungsabfall der parasitären Diode 24 nicht zum Tragen. Die in dem Halbleiterschalter 26 auftretende Verlustleistung wird somit auf ein Minimum reduziert. Entsprechend können die Leistungsverstärker des die Last 14 bildenden Autoradios bzw. Infotainmentsystems eine optimale maximale Ausgangsspannung liefern. Nachdem der Vorwärtsspannungsabfall der parasitären Diode 24 nicht zum Tragen kommt, kann der Tuner des Autoradios auch noch bei der minimalen, beispielsweise am eingangsseitigen Anschluss 20 anliegenden Spannung von beispielsweise etwa 9 V zuverlässig arbeiten.

Wie bereits erwähnt, dient die parasitäre Diode 26 des beispielsweise durch einen n-Kanal-Feldeffekttransistor gebildeten Halbleiterschalters 26 auch der Welligkeitsunterdrückung.

Zur Vermeidung möglicher Verluste infolge des Vorwärtsspannungsabfalls ist die parasitäre Diode in Richtung einer idealen Diode mit praktisch keinerlei Verlusten optimiert.

Dazu wird die Stromrichtung durch den durch einen Feldeffekttransistor gebildeten Halbleiterschalter 26 erfasst. In dem Fall, dass ein Vorwärtsstrom vom Source-Anschluss S zum Drain-Anschluss D des durch einen Feldeffekttransistor gebildeten Halbleiterschalters 26 fließt, wird der Halbleiterschalter 26 durchgeschaltet. Dagegen wird der Halbleiterschalter 26 im Fall eines Rückstroms gesperrt. Auf diese Weise arbeitet der durch einen Feldeffekttransistor gebildete Halbleiterschalter 26 praktisch ohne Verlustleistung.

In dem Fall, dass die Versorgungsspannung von einer Welligkeit überlagert ist, bleibt der Halbleiterschalter 26 gesperrt, da die Gate-Spannung des Halbleiterschaltes nur von der Ladungspumpe 32 beeinflusst wird, die eine eine Spannungsquelle umfassende Spannungsversorgung 49 und die Diode 52 umfasst. Die Ladungspumpe 32 wird beispielsweise durch eine 12 V-Rechteckspannung eines die Spannungsversorgung bzw. Spannungsquelle 49 umfassenden Schaltreglers 42 gespeist. Dabei ist zumindest eine Rechteckamplitude von z. B. 7 Vpp erforderlich, damit die Gate-Schwelle deutlich überschritten werden kann.

Die Mittel 34 zur Erfassung der Stromrichtung enthalten den die Ladungspumpe 32 beaufschlagenden Komparator 36, der die beiden Transistoren 72 und 86, den Digital-Transistor 38 und die Widerstände 74, 76, 82, 84, 90, 88 und 90 umfasst.

Ist die Versorgungsspannung von einer Welligkeit überlagert, so erfasst der Komparator 32 die Spannungsdifferenz zwischen dem Source- und dem Drain-Anschluss des Halbleiterschalters 26. Hierbei sollte der Halbleiter zweckmäßigerweise einen gewissen Durchlasswiderstand besitzen, z. B. typischerweise 16 mOhm. Ist die Source-Spannung größer als die Drain-Spannung (Vorwärtsstrom), so liefert der Komparator 32 beispielsweise ein H-Signal. Der durch einen Feldeffekttransistor gebildete Halbleiterschalter 26 bleibt durchgeschaltet. Ist dagegen die Source-Spannung kleiner als die Drain-Spannung (Rückstrom), so liefert der Halbleiterschalter 26 beispielsweise ein L-Signal. Der Halbleiterschalter bleibt dann gesperrt, allerdings nur für einige wenige 10 ms. Mit dieser zeitlichen Grenze wird die vom Kunden geforderte unterste Welligkeitsfrequenz von beispielsweise 100 Hz definiert. Die entsprechende zeitliche Begrenzung wird im vorliegenden Fall beispielsweise durch den Kondensator 96 verwirklicht, der beim konkreten Ausführungsbeispiel beispielsweise einen Wert von etwa 470 nF besitzt.

In dem Bereich, in dem die Source-Spannung etwa gleich der Drain-Spannung ist, bewirken die Widerstände 74 und 90 des Komparators 36 den sanften oder kontinuierlichen Übergangsbereich, wodurch ein Schwingen des Systems verhindert wird.

Der Komparator 36 ist durch den Digital-Transistor 38 über die Spannungsversorgung 40 von beispielsweise 3,3 V aktivierbar. Der Ruhestrom der Messschaltung wird durch Abschalten der 3,3 V reduziert, z. B. im Stand-By-Betrieb. Der Digital-Transistor 38 bildet in Kombination mit dem Widerstand 94 eine Konstantstromquelle, über die die Transistoren 72 und 86 des Komparators 36 vorgespannt werden.

Mit dem Schaltregler 42 wird normalerweise in erster Linie eine Gleichspannung von beispielsweise von 3,3 V erzeugt. Im vorliegenden Fall wird jedoch der Takt dieses Schaltreglers 42 verwendet, der hier die Amplitude der Betriebsspannung hat, also nominal insbesondere 14 V. Die Verwendung eines derartigen Schaltreglers bringt im vorliegenden Fall unter anderem die Vorteile mit sich, dass Frequenz und Amplitude gut für die hier erwünschte Funktion geeignet sind und die Frequenz im Radio beispielsweise speziell behandelt werden kann, so dass keine Störungen insbesondere in AM-Band zu hören sind. Die Frequenzen können nämlich abhängig von der Empfangsfrequenz so gewählt werden, dass keine der Oberwellen in den Bereich der getunten Abstimmfrequenz fällt.

Das "Enable".-Signal (vergleiche Fig. 1) kann aus der vom Schaltregler erzeugten Gleichspannung gebildet werden. Wenn also der Schaltregler 42 den Zustand "Ein" annimmt, wird einerseits die Ladungspumpe mit beispielsweise 12 V versorgt, während andererseits der Komparator bzw. die Konstantstromquelle mit einer Gleichspannung von beispielsweise 3,3 V versorgt wird.

Die zwischen Source S und Gate G des Halbleiterschalters 26 vorgesehene Zenerdiode 66 dient zum einen dem Schutz des durch einen Feldeffekttransistor gebildeten Halbleiterschalters 26 vor elektrostatischen Entladungen und Überspannungen. Zum anderen dient sie dazu, die Gate-Spannung so gering zu halten, dass die Amplitude des Ausgangssignals des Komparators 36 auch im Fall der negativen Amplitudenspitze der Welligkeit am eingangsseitigen Anschluss 20 (z.B. 12 V_{DC} - 2 Vp) noch hoch genug ist, um über das Gate den Halbleiterschalter 26 zu sperren.

Bei einem Übergang der Spannung am eingangsseitigen Anschluss 20 bzw. der Source-Spannung des Halbleiterschalters 26 von 0 V auf einen Wert von beispielsweise -14 V (falsche, d.h. umgekehrte Polung) wird die Gate-Spannung des Halbleiterschalters 26 durch den Kondensator 96 auf einen Wert von z.B. 0 V gehalten, der höher ist als die Gate-Schwellenspannung gegenüber der Source-Spannung. Dies würde nun allerdings dazu führen, dass ein Rückstrom auftritt, bis die Gate-Spannung entladen ist. Ein solcher Rückstrom wird nun durch den Transistor 56 verhindert, der für eine Entladung der Gate-Source-Spannung bei einem Übergang der Spannung am eingangsseitigen Anschluss 20 von 0 V auf insbesondere -14 V sorgt.

Durch die Diode 64 wird die den Transistor 56 sowie die beiden Widerstände 60, 62 umfassende Schaltung geschützt. So kann beispielsweise in dem Fall, dass aufgrund einer falschen Polung an dem eingangsseitigen Anschluss 20 eine Spannung von -14 V anliegt, die Emitter-Basis-Spannung des Transistors 56 unterhalb 5 V gehalten werden.

Auf die gleiche Weise schützt die Diode 80 den Transistor 72.

Bei dieser Schutzvorrichtung 10 fließt im Standby-Betrieb praktisch kein Strom. Zudem ist eine Spannungsmessung an der Betriebsspannung bzw. am eingangsseitigen Anschluss 20 möglich.

### Bezugszeichenliste

- 10: Schutzvorrichtung
- 12: Gleichspannungsquelle
- 14: Last, Autoradio, Infotainmentsystem
- 16: Sicherung
- 18: Klemme
- 20: eingangsseitiger Anschluss
- 22: Klemme
- 24: parasitäre Diode
- 26: Halbleiterschalter, Feldeffekttransistor
- 28: Schaltpfad
- 30: Kondensator
- 32: Ladungspumpe
- 34: Mittel zur Erfassung der Stromrichtung
- 36: Komparator
- 38: Digital-Transistor
- 40: Spannungsversorgung
- 42: Schaltregler
- 44: Kondensator
- 46: Widerstand
- 48: Widerstand
- 49: Spannungsversorgung
- 50: Widerstand
- 52: Diode
- 54: Widerstand
- 56: Transistor
- 58: Widerstand
- 60: Widerstand
- 62: Widerstand
- 64: Diode
- 66: Zenerdiode
- 68: Transistor
- 70: Widerstand
- 72: Transistor
- 74: Widerstand
- 76: Widerstand
- 78: Widerstand
- 80: Diode
- 82: Widerstand
- 84: Widerstand
- 86: Transistor
- 88: Widerstand
- 90: Widerstand
- 92: Lasteingang
- 94: Widerstand
- 96: Kondensator
- 98: geglättete Ausgangsspannung
- 100: nicht geglättete Eingangsspannung

- D: Drain
- G: Gate
- S: Source

## Patentansprüche

1. Schutzvorrichtung (10) für eine über eine Gleichspannungsquelle (12) gespeiste Last (14), insbesondere für ein Fahrzeug-Infotainmentsystem, mit einem insbesondere über eine Sicherung (16) mit einer Klemme (18) der Gleichspannungsquelle (12) verbindbaren eingangsseitigen Anschluss (20) und einer mit der Last (14) in Serie geschalteten, zwischen den eingangsseitigen Anschluss (20) und der Last (14) angeordneten, Diode, die durch eine parasitäre Diode (24) eines Halbleiterschalters (26) gebildet ist, die parallel zu einem Schaltpfad (28) des Halbleiterschalters (26) angeordnet ist, der bei durchgeschaltetem Halbleiterschalter (26) geschlossen und bei gesperrtem Halbleiterschalter (26) geöffnet ist, wobei die parasitäre Diode (24) des Halbleiterschalters (26) bei korrekter Polung der Gleichspannungsquelle (12) in Durchlassrichtung und bei falschen Polung in Sperrrichtung geschaltet ist, und wobei der Halbleiterschalter (26) in Abhängigkeit von der Polung der Gleichspannungsquelle (12) so ansteuerbar ist, dass er bei korrekter Polung zur Überbrückung der parasitären Diode (24) durch den Schaltpfad (28) durchgeschaltet und bei falscher Polung gesperrt ist,
**dadurch gekennzeichnet,**
**dass** die parasitäre Diode (24) des Halbleiterschalters (26) Teil eines der Welligkeitsunterdrückung dienenden Spitzengleichrichters ist, der zudem einen der Last (14) zugeordneten Kondensator (30), insbesondere Sperrkondensator, umfasst.

2. Schutzvorrichtung nach Anspruch 1,
**dadurch gekennzeichnet,**
**dass** der Halbleiterschalter (26) einen Feldeffekttransistor umfasst und die parasitäre Diode (24) durch eine Substrat-Diode des Feldeffekttransistors gebildet ist.

3. Schutzvorrichtung nach Anspruch 2,
**dadurch gekennzeichnet,**
**dass** Bulk und Source (S) des Feldeffekttransistor miteinander verbunden sind und die parasitäre Diode (24) durch die Substrat-Diode zwischen Bulk und Drain (D) gebildet ist.

4. Schutzvorrichtung nach Anspruch 2 oder 3,
**dadurch gekennzeichnet,**
**dass** der Feldeffekttransistor durch einen n-Kanal-FET gebildet ist.

5. Schutzvorrichtung nach Anspruch 4,
dadurch **gekenntzeichnet**,
dass der Feldeffekttransistor durch einen n-Kanal-Mosfet gebildet ist.

6. Schutzvorrichtung nach einem der vorhergehenden Ansprüche,
dadurch **gekenntzeichnet**,
dass eine Sicherung (16) mit dem Halbleiterschalter (26) und der Last (14) in Serie geschaltet ist.

7. Schutzvorrichtung nach einem der vorhergehenden Ansprüche,
**dadurch gekennzeichnet,**
**dass** der insbesondere einen Feldeffekttransistor umfassende Halbleiterschalter (26) über eine Ladungspumpe (32) ansteuerbar ist.

8. Schutzvorrichtung nach einem der vorhergehenden Ansprüche,
**dadurch gekennzeichnet,**
**dass** Mittel (34) zur Erfassung der Richtung des durch den Halbleiterschalter (26) fließenden Stromes vorgesehen sind und der Halbleiterschalter (26) in Abhängigkeit von der erfassten Stromrichtung ansteuerbar ist.

9. Schutzvorrichtung nach Anspruch 8,
**dadurch gekennzeichnet,**
**dass** der Halbleiterschalter (26) bei korrekter Stromrichtung durchgeschaltet und bei falscher Stromrichtung gesperrt wird.

10. Schutzvorrichtung nach Anspruch 8 oder 9,
**dadurch gekennzeichnet,**
**dass** die Mittel (34) zur Erfassung der Stromrichtung einen Komparator (36) umfassen, der die Source-Spannung und die Drain-Spannung des insbesondere einen Feldeffekttransistor umfassenden Halbleiterschalters miteinander vergleicht.

11. Schutzvorrichtung nach Anspruch 10,
**dadurch gekennzeichnet,**
**dass** der Halbleiterschalter (26) in Abhängigkeit von dem vom Komparator gelieferten Vergleichsergebnis ansteuerbar ist.

12. Schutzvorrichtung nach Anspruch 11,
**dadurch gekennzeichnet,**
**dass** der insbesondere einen Feldeffekttransistor umfassenden Halbleiterschalter (26) über eine durch den Komparator (36) beaufschlagte Ladungspumpe (32) entsprechend ansteuerbar ist.

13. Schutzvorrichtung nach einem der Ansprüche 10 bis 12,
**dadurch gekennzeichnet,**
**dass** der Halbleiterschalter (26) zur Welligkeitsunterdrückung in Abhängigkeit von dem vom Komparator (36) gelieferten Vergleichsergebnis so ansteuerbar ist, dass er in dem Fall, dass die Source-Spannung größer ist als die Drain-Spannung, durchgeschaltet bleibt und in dem Fall, dass die Source-Spannung kleiner ist als die Drain-Spannung, jeweils für eine vorgebbare Zeit gesperrt wird.

14. Schutzvorrichtung nach Anspruch 13,
**dadurch gekennzeichnet,**
**dass** der Halbleiterschalter (26) in dem Fall, dass die Source-Spannung kleiner ist als die Drain-Spannung, jeweils für maximal etwa 50 ms, insbesondere für maximal etwa 30 ms und vorzugsweise für maximal etwa 10 ms gesperrt wird.

15. Schutzvorrichtung nach einem der Ansprüche 10 bis 14,
**dadurch gekennzeichnet,**
**dass** der Komparator (36) zur Welligkeitsunterdrückung so ausgelegt ist, dass der Halbleiterschalter (26) in dem Bereich, in dem die Source-Spannung etwa gleich der Drain-Spannung ist, sanft bzw. kontinuierlich vom durchgeschalteten Zustand in den gesperrten Zustand und umgekehrt umgeschaltet wird.

16. Schutzvorrichtung nach einem der Ansprüche 10 bis 15,
**dadurch gekennzeichnet,**
**dass** der Komparator (36) durch einen Digital-Transistor (38) über eine Spannungsversorgung (40) aktivierbar ist.

17. Schutzvorrichtung nach Anspruch 16,
**dadurch gekennzeichnet,**
**dass** der Komparator (36) eine Transistorschaltung umfasst und eine den Digital-Transistor (38) und die Spannungsversorgung (40) umfassende Konstantstromquelle vorgesehen ist, über die die Transistoren der Transistorschaltung vorgespannt werden.

18. Schutzvorrichtung nach einem der vorhergehenden Ansprüche,
**dadurch gekennzeichnet,**
**dass** zwischen Source (S) und Gate (G) des insbesondere einen Feldeffekttransistor umfassenden Halbleiterschalters (26) eine Zenerdiode (66) geschaltet ist.

19. Schutzvorrichtung nach einem der vorhergehenden Ansprüche,
**dadurch gekennzeichnet,**
**dass** Mittel (96) vorgesehen sind, um bei einem Übergang der Source-Spannung des insbesondere einen Feldeffekttransistor umfassenden Halbleiterschalters (26) von 0V auf einen bei einer falschen Polung auftretenden Spannungsdifferenz zwischen Gate und Source auf einem Wert von etwa 0V zu halten, und Mittel zur Unterdrückung eines Rückstromes vorgesehen sind.

20. Schutzvorrichtung nach einem der vorhergehenden Ansprüche,
**dadurch gekennzeichnet,**
**dass** zur Strommessung ein mit dem Feldeffekttransistor in Serie geschalteter Shunt-Widerstand vorgesehen ist.

## Claims

1. Protection device (10) for a load (14) powered by a direct current voltage source (12), in particular for a vehicle infotainment system, having an input-side terminal (20) connectable in particular via a fuse (16) to a connector (18) of the direct current voltage source (12) and a diode connected in series with the load (14) and arranged between the input-side terminal (20) and the load (14), formed by a parasitic diode (24) of a semiconductor switch (26) arranged parallel to a switching path (28) of the semiconductor switch (26), which is closed with a connected semiconductor switch (26) and open with a blocked semiconductor switch (26), wherein said parasitic diode (24) of the semiconductor switch (26) is connected in the forward direction with correct polarity of the direct current voltage source (12) and in the reverse direction with incorrect polarity, and wherein the semiconductor switch (26) is controllable according to the polarity of the direct current voltage source (12) such that with correct polarity it is connected for bypassing the parasitic diode (24) by the switching path (28) and is blocked with incorrect polarity,
**characterized in that**
the parasitic diode (24) of the semiconductor switch (26) is part of a peak rectifier serving for ripple suppression, in addition including a capacitor (30), in particular a blocking capacitor, associated with the load (14).

2. Protection device according to claim 1,
**characterized in that**
the semiconductor switch (26) includes a field effect transistor and the parasitic diode (24) is formed by a substrate diode of the field effect transistor.

3. Protection device according to claim 2,
**characterized in that**
bulk and source (S) of the field effect transistor are connected to each other and the parasitic diode (24) is formed by the substrate diode between bulk and drain (D).

4. Protection device according to claim 2 or 3,
**characterized in that**
the field effect transistor is formed by an n-channel FET.

5. Protection device according to claim 4,
**characterized in that**
the field effect transistor is formed by an n-channel Mosfet.

6. Protection device according to one of the preceding claims,
**characterized in that**
a fuse (16) is connected in series to the semiconductor switch (26) and the load (14).

7. Protection device according to one of the preceding claims,
**characterized in that**
the semiconductor switch (26) including in particular a field effect transistor is controllable via a charge pump (32).

8. Protection device according to one of the preceding claims,
**characterized in that**
means (34) are provided for detecting the direction of the current flowing through the semiconductor switch (26) and the semiconductor switch (26) is controllable according to the detected current direction.

9. Protection device according to claim 8,
**characterized in that**
the semiconductor switch (26) is connected with correct current direction and is blocked with incorrect current direction.

10. Protection device according to claim 8 or 9,
**characterized in that**
the means (34) for detecting the current direction include a comparator (36) for comparing the source voltage and the drain voltage of the semiconductor switch including in particular a field effect transistor.

11. Protection device according to claim 10,
**characterized in that**
the semiconductor switch (26) is controllable according to the comparison result provided by the comparator.

12. Protection device according to claim 11,
**characterized in that**
the semiconductor switch (26), including in particular a field effect transistor, is correspondingly controllable by a charge pump (32) actuable by the comparator (36).

13. Protection device according to one of the claims 10 to 12,
**characterized in that**
the semiconductor switch (26) is controllable for ripple suppression according to the comparison result provided by the comparator (36) such that it remains connected in the case that the source voltage is greater than the drain voltage and is respectively blocked for a predefined time in the case that the source voltage is lower than the drain voltage.

14. Protection device according to claim 13,
**characterized in that**
the semiconductor switch (26) is respectively blocked for a maximum of about 50 ms, in particular for a maximum of about 30 ms and preferably for a maximum of about 10 ms in the case that the source voltage is lower than the drain voltage.

15. Protection device according to one of the claims 10 to 14,
**characterized in that**
the comparator (36) is adapted for ripple suppression such that the semiconductor switch (26) is switched gently and continuously from the connected state to the blocked state and vice versa in the range in which the source voltage is approximately equal to the drain voltage.

16. Protection device according to one of the claims 10 to 15,
**characterized in that**
the comparator (36) can be activated by a digital transistor (38) via a voltage supply (40).

17. Protection device according to claim 16,
**characterized in that**
the comparator (36) includes a transistor circuit and a constant current source is provided including the digital transistor (38) and the voltage supply (40) via which the transistors of the transistor circuit are biased.

18. Protection device according to one of the preceding claims,
**characterized in that**
a Zener diode (66) is connected between the source (S) and the gate (G) of the semiconductor switch (26) including in particular a field effect transistor.

19. Protection device according to one of the preceding claims,
**characterized in that**
means (96) are provided to maintain, at a transition of the source voltage of the semiconductor switch (26), including in particular a field effect transistor, from 0V to a voltage difference between gate and source, occurring with an incorrect polarity, at a value of about 0V, and means are provided for suppression of a reverse current.

20. Protection device according to one of the preceding claims,
**characterized in that**
a shunt resistor is provided connected in series with the field effect transistor for measuring current.

## Revendications

1. Dispositif de protection (10) pour une charge (14) alimentée par une source de tension continue (12), en particulier pour un système d'info-divertissement, comportant un raccord (20) côté entrée susceptible d'être connecté à une borne (18) de la source de tension continue (12) en particulier par un fusible (16), et comportant une diode montée en série avec la charge (14) et disposée entre le raccord côté entrée (20) et la charge (14), diode qui est formée par une diode parasitaire (24) d'un commutateur à semi-conducteur (26) qui est agencé en parallèle à une voie de commutation (28) du commutateur à semi-conducteur (26) qui, le commutateur à semi-conducteur (26) étant passant, est fermée et qui, le commutateur à semi-conducteur (26) étant bloqué, est ouverte, la diode parasitaire (24) du commutateur à semi-conducteur (26) étant commutée en direction de passage lors d'une polarisation correcte de la source de tension continue (12) et étant commutée en direction de blocage lors d'une polarisation erronée, le commutateur à semi-conducteur (26) étant pilotable en fonction de la polarisation de la source de tension continue (12) de telle sorte que lors d'une polarisation correcte, en vue de ponter la diode parasitaire (24), il est passant à travers la voie de commutation (28) et il est bloqué lors d'une polarisation erronée,
**caractérisé en ce que**
la diode parasitaire (24) du commutateur à semi-conducteur (26) fait partie d'un redresseur de pics servant à supprimer les ondulations, qui comprend en outre un condensateur (30) associé à la charge (14), en particulier un condensateur de blocage.

2. Dispositif de protection selon la revendication 1,
**caractérisé en ce que**
le commutateur à semi-conducteur (26) comprend un transistor à effet de champ et la diode parasitaire (24) est formée par une diode de substrat du transistor à effet de champ.

3. Dispositif de protection selon la revendication 2,
**caractérisé en ce que**
le corps ("bulk") et la source (S) du transistor à effet de champ sont connectés l'un à l'autre et la diode parasitaire (24) est formée par la diode de substrat entre le corps et le drain (D).

4. Dispositif de protection selon la revendication 2 ou 3,
**caractérisé en ce que**
le transistor à effet de champ est formé par un transistor à effet de champ à canal n.

5. Dispositif de protection selon la revendication 4,
**caractérisé en ce que**
le transistor à effet de champ est formé par un composant MOSFET à canal n.

6. Dispositif de protection selon l'une des revendications précédentes,
**caractérisé en ce que**
un fusible (16) est monté en série avec le commutateur à semi-conducteur (26) et la charge (14).

7. Dispositif de protection selon l'une des revendications précédentes,
**caractérisé en ce que**
le commutateur à semi-conducteur (26) comprenant en particulier un transistor à effet de champ est pilotable via un convertisseur à pompe de charge (32).

8. Dispositif de protection selon l'une des revendications précédentes,
**caractérisé en ce que**
il est prévu des moyens (34) pour détecter la direction du courant passant à travers le commutateur à semi-conducteur (26), et le commutateur à semi-conducteur (26) est pilotable en fonction de la direction détectée du courant.

9. Dispositif de protection selon la revendication 8,
**caractérisé en ce que**
le commutateur à semi-conducteur (26) est passant lors d'une direction correcte du courant et est bloqué lors d'une direction erronée du courant.

10. Dispositif de protection selon la revendication 8 ou 9,
**caractérisé en ce que**
les moyens (34) pour détecter la direction du courant comprennent un comparateur (36) qui compare la tension de la source et la tension du drain du commutateur à semi-conducteur comprenant en particulier un transistor à effet de champ.

11. Dispositif de protection selon la revendication 10,
**caractérisé en ce que**
le commutateur à semi-conducteur (26) est pilotable en fonction du résultat de comparaison fourni par le comparateur.

12. Dispositif de protection selon la revendication 11,
**caractérisé en ce que**
le commutateur à semi-conducteur (26) comprenant en particulier un transistor à effet de champ est pilotable en correspondance par un convertisseur à pompe de charge (32) sollicité par le comparateur (36).

13. Dispositif de protection selon l'une des revendications 10 à 12,
**caractérisé en ce que**
pour supprimer l'ondulation, le commutateur à semi-conducteur (26) est pilotable en fonction du résultat de comparaison fourni par le comparateur (36) de manière à rester passant pendant une période prédéterminée au cas où la tension de la source est supérieure à la tension du drain, et à être bloqué pendant une période prédéterminée au cas où la tension de la source est inférieure à la tension du drain.

14. Dispositif de protection selon la revendication 13,
**caractérisé en ce que**
au cas où la tension de la source est inférieure à la tension du drain, le commutateur à semi-conducteur (26) reste bloqué au maximum pendant environ 50 ms, en particulier au maximum pendant environ 30 ms et de préférence au maximum pendant environ 10 ms.

15. Dispositif de protection selon l'une des revendications 10 à 14,
**caractérisé en ce que**
pour supprimer l'ondulation le comparateur (36) est conçu de telle sorte que le commutateur à semi-conducteur (26) est commuté en douceur ou en continu de l'état passant vers l'état bloqué et inversement, dans une plage dans laquelle la tension de source est approximativement égale à la tension de drain.

16. Dispositif de protection selon l'une des revendications 10 à 15,
**caractérisé en ce que**
le comparateur (36) est activable par un transistor numérique (38) via une alimentation en tension (40).

17. Dispositif de protection selon la revendication 16,
**caractérisé en ce que**
le comparateur (36) comprend un circuit à transistor, et **en ce qu'**il est prévu une source de courant constant comprenant le transistor numérique (38) et l'alimentation en tension (40), via laquelle les transistors du circuit à transistor sont mis sous tension préliminaire.

18. Dispositif de protection selon l'une des revendications précédentes,
**caractérisé en ce que**
une diode Zener (66) est montée entre la source (S) et la grille (G) du commutateur à semi-conducteur (26) comprenant en particulier un transistor à effet de champ.

19. Dispositif de protection selon l'une des revendications précédentes,
**caractérisé en ce que**
il est prévu des moyens (96) afin de maintenir, lors d'une transition de la tension de source du commutateur à semi-conducteur (26) comprenant en particulier un transistor à effet de champ, pour passer de 0 V à une valeur de tension correspondante lors d'une polarisation erronée, la différence de tension entre la grille et la source à une valeur de 0 V, qui se produit lors d'une polarisation erronée,
et il est prévu des moyens pour supprimer un courant de retour.

20. Dispositif de protection selon l'une des revendications précédentes,
**caractérisé en ce que**
pour mesurer le courant, il est prévu une résistance de shunt montée en série avec le transistor à effet de champ.
